# EUROPEAN PATENT APPLICATION

(11) **EP 4 005 666 A1**
(43) Date of publication of application: **01.06.2022**
(21) Application number: 20908621.4
(22) Date of filing: 27.11.2020
(51) Int. Cl.: B01J 8/08, B01J 23/56, B01J 23/92, C10G 35/085

(54) **APPARATUS FOR CATALYTIC REFORMING WITH CONTINUOUS CATALYST REGENERATION**

(30) Priority: 30.12.2019 RU 2019145563
(71) Applicant: LENGIPRONEFTECHIM, LIMITED LIABILITY COMPANY (LLC "LENGIPRONEFTECHIM"), St. Petersburg, 196084 (RU)
(72) Inventor: LEBEDSKOY-TAMBIEV, Mikhail Andreevich, Moscow, 127434 (RU); KALABIN, Dmitrii Aleksandrovich, Petersburg, 196128 (RU); ERMOLENKO, Alla Dmitrievna, Petersburg, 197373 (RU); SHISHKIN, Sergei Nikolaevich, Petersburg, 198188 (RU); IABLOKOV, Aleksei Sergeevich, Kirishi, 187114 (RU); ALEKSANDROV, Denis Sergeevich, Petersburg, 190000 (RU); DIACHENKO, Konstantin Vasilievich, Georgievsk, 357830 (RU); VORONINA, Julia Vadimovna, Petersburg, 196158 (RU); CHULKOV, Konstantin Sergeevich, Petersburg, 196118 (RU); CHERNENKO, Aleksandr Alekseevich, St. Petersburg, 196105 (RU); ZAVIALOVA, Natalia Nikolaevna, St. Petersburg, 197348 (RU); KHANOVA, Nataliia Gennadievna, St. Petersburg, 196233 (RU)
(74) Representative: Jeck, Jonathan
(86) International application number: PCT/RU2020/000644
(87) International publication number: WO 2021/137724

(57) **Abstract**

The invention relates to the field of oil refining and petrochemisty, and more particularly to technology and devices for refining a hydrocarbon feedstock in a continuous reforming process on a catalyst in a moving or fluidized bed, and for the oxidative regeneration of the reforming catalysts.

Using the invention makes it possible to reduce catalyst attrition from 2.5-3.4% to 2.2-2.8% (i.e. by 14-17%) and to reduce the time taken to restore catalyst activity from 3.5-3.0 hours to 3.0-2.6 hours (i.e. by 12-15%).

## Description

### Field of the Invention

The invention relates to the field of oil refining and petrochemistry, and namely, to hydrocarbons processing in the course of continuous reforming on a catalyst in a moving or fluidized bed.

### Related Art

Catalytic reforming is one of the most important processes for refining gasoline cuts in order to increase proknock properties of gasoline and obtain aromatic hydrocarbons. At that, one of the main issues encountered during reforming is the problem of catalyst deactivation due to accumulation of coke deposits, as a result of which the catalyst becomes unsuitable for use in the process. Such deactivated catalyst should be regenerated and brought back to its original quality before it can be reused in reforming process.

Continuous reforming, which is typically carried out using a catalyst in a moving bed, allows for more stringent operating conditions by maintaining high catalytic activity of almost fresh catalyst through regeneration cycles for several days. In this case, the moving bed system has the advantage of not having to stop production during regeneration, removal or replacement of the catalyst. Catalyst pellets are continuously removed from the reaction zone to the regeneration zone to remove coke by high-temperature burn-off, usually in contact with oxygen-containing gas.

Reactors are known with a moving or fluidized bed of catalyst consisting of several sections with catalyst, between which there are devices for transporting the catalyst from section to section in the form of discharge pipes, in which the entire mass of catalyst is periodically or continuously moved by gravity from the upper section to the lower section. Thereat, the discharge device, due to the smaller cross-section, prevents transfer of reaction mixture from section to section. [Maslyansky G.N. Catalytic Reforming of Gasoline / Maslyansky G.N., Shapiro R.N. - L .: Chemistry, 1985. - 213 p.].

The disadvantage of such Reactors is the presence of stagnant zones between the pipes, which occur when the catalyst pellets move through the pipes.

In state-of-the-art units, the catalyst regeneration process is usually carried out in the regeneration zone outside the Reactor. Catalyst pellets in "moving bed" process pass through one or more Reactors and enter the continuous regeneration zone. Continuous catalyst regeneration is generally accomplished by passing catalyst pellets by gravity from top to bottom in a moving bed through various processing zones in the Regeneration Column. Oxygen for coke combustion enters the combustion section of the regeneration zone with regeneration gas containing usually from 0.5 to 1.5% oxygen by volume. Regeneration gases, consisting of carbon monoxide, carbon dioxide, water, unreacted oxygen, chlorine, hydrogen chloride, sulfur and nitrogen oxides, are withdrawn from the combustion section, while part of the gases are removed from the regeneration zone in the form of off-gas. The balance is combined with a small amount of oxygen-containing fresh gas, usually air, in the amount of about 3% of the total gas content in order to make-up for the consumed oxygen, and returned to the combustion section in the form of regenerating gas [RU 2180346, 2002; US 3652231].

Lifting of the catalyst pellets during catalyst transfer from reaction zone to regeneration zone, from regeneration zone to reaction zone, and also, in some cases, between the stages of reaction process is usually carried out by pneumatic conveying, in which a gas stream of a sufficient velocity lifts the catalyst pellets and transports them upward for movement and dissipation in a set of containers. Such systems use a variety of elbows and valves to direct and control the movement of catalyst pellets. As the catalyst is transported, its pellets are damaged with formation of finely dispersed material. Particles generated during such transportation not only interfere with normal functioning of the catalyst, but can also lead to the pressure drop in the gaseous medium passing through the tubular elements. A significant drop in pressure associated with the presence of discrete material in the system increases operating costs of the process and can hinder maintenance of the required process modes [RU 2174145, 2001].

In this regard, in the course of catalyst regeneration, it is necessary to combine the maximum coke removal from the surface of pellets while minimizing the length of the catalyst movement path, and, as a consequence, minimizing the pellets abrasion.

An important role is played by the combination of this parameter with the process conditions in the reaction zone and characteristics of the catalyst used. The initial selection of temperature and pressure within a wide range is primarily based on the desired octane number of the reformate, taking into account characteristics of the feed and catalyst. The temperature is then slowly increased during operation to compensate for inevitable deactivation of the catalyst and to maintain a constant octane number of the product.

Currently, some of the most promising are reforming catalysts containing tin as a platinum group (or group VIII) modifier, along with an additional third metal promoter, for example, rhenium, indium, gallium, iridium, etc. The process is carried out under the following conditions: temperature 315°C-600°C, pressure 100 kPa - 7 MPa (abs), liquid hourly space velocity 0.1-20 h⁻¹, and molar ratio of hydrogen to feed in the form of naphtha 1-20 (US 6153090).

However, these process parameters are not optimal and are regularly improved in the course of research. So, the optimal condition for the reforming process in a moving bed with a catalyst obtained by the process described in Patent RU 2357799, 2009 containing Sn 0.01-5% wt., Pt 0.01-2% wt, Re 0.05-5% wt. (in terms of element) on alumina is a pressure of 350-2500 kPa (abs). The reforming temperature ranges from 425°C to 565°C.

The disadvantage of this process was the long catalyst regeneration time and significant catalyst losses due to abrasion, which is due to the limitations of the units used and insufficient strength of tin-containing catalyst pellets.

The closest in technical essence to the claimed method is the process previously developed by the authors under Patent RU 186090, 2018, which proposes a unit containing a Reactor Unit consisting of a Reactor and a coked catalyst hopper located at Reactor outlet, a Regeneration Column, gas treatment system and pipelines, and additionally containing a purge hopper between the Reactor outlet and coked catalyst hopper, as well as a coked catalyst handling hopper connected via gas mixture filtration system with the upper part of Regeneration Column and coked catalyst hopper, at that, coked catalyst handling hopper, Regeneration Column, Reactor, purge hopper, and coked catalyst hopper are placed vertically under each other, and coked catalyst hopper and coked catalyst handling hopper are connected with a pipeline, the bottom part of which is supplied with nitrogen-air mixture with an oxygen content of 0.5 - 2.0% vol. As a rule, the Reactor Unit consists of two structures connected in parallel containing a Reaction Column, a purge hopper, and a coked catalyst lock hopper.

Reforming process is carried out at the following conditions: temperature 490 ÷ 550°C, pressure 300 ÷ 700 kPa, liquid hourly space velocity not more than 2 h⁻¹ and molar ratio of hydrogen to feed in the form of naphtha cut 2.0 ÷ 2.15.

Regeneration process is carried out at the following conditions: burn-off temperature - 470 ÷ 540°C, pressure - 0.4 ÷ 0.5 MPa, oxygen concentration in the regeneration gas 0.5 ÷ 2.0% vol.

The disadvantage of this process is loss of the tin catalyst during its transportation in the process.

The technical problem solved by the authors was development of a reforming process using the unit that reduces abrasion of a tin-containing catalyst during production cycle.

### Summary of the Invention

The technical result is achieved by the fact that continuous catalyst regeneration unit using a tin catalyst containing a Reactor Unit including two parallel Reaction Columns and coked catalyst purge hoppers located at the columns outlet, lock hoppers and transport hoppers, coked catalyst handling hoppers, a Regeneration Column, gas treatment system and pipelines, in particular a pipeline for catalyst transportation to the Regeneration Column and partial catalyst regeneration in a nitrogen-air mixture, uses a Reaction Column with annular sections containing a tin reforming catalyst and a central perforated pipeline, at that the sections in the bottom part are funnel-shaped and interconnected by a device for catalyst transportation made in the form of the annular channel coaxial with the central pipeline, the central pipeline at the end of each section is shut off with a gas-tight baffle, while the sections have gas-permeable side walls, along which an annular gap is made between the section wall and the body wall connected with the nozzles for supply and discharge of product streams; as well as a Regeneration Column, in which a central perforated pipeline and catalyst-containing annular sections of coke burn-off zones are located along which an annular gap is made between the section wall and the body wall, and interconnected by means of a separating device consisting of a funnel-shaped bottom part of the upper section and the annular channel coaxial with the central pipeline, an Oxychlorination Section connected with the lower coke burn-off zone by a separating device for catalyst transportation made in the form of discharge pipes and ensuring the catalyst passage, but preventing the passage of gases, a Calcination Section connected to the Oxychlorination Section by a funnel-shaped catalyst transport device; the central pipeline at the end of each section in the burn-off zone is shut off by a gas-tight baffle, and sections in the burn-off zone have gas-permeable side walls, at that the Reactor block and the Regeneration block are interconnected by pipelines for transporting the coked and regenerated catalyst, wherein the pipeline for transporting the coked catalyst is connected to the nitrogen and dry air mixing and nitrogen-air mixture preparation block and regenerated catalyst pipeline is connected to the nitrogen supply system.

Typically, the Reaction Columns include 2 to 4 successive annular sections.

The claimed unit allows to reduce the height of the designed structure while maintaining the platinum-tin reforming catalyst pellets in the most active form (ensuring its maximum activity) due to the fact that the Regeneration Column is located in space parallel to the Reaction Columns of the Reactor Unit.

Coked catalyst transport in nitrogen-air mixture makes it possible to burn off the light-combustible coke from the catalyst surface before it enters the Regeneration Column, thereby stabilizing the process of coke burn-off from the catalyst pellets in the moving bed in burn-off zones of the Regeneration Column. At the same time, light-combustible coke burn-off carried out in a rarefied gas flow during its transportation from reaction zone to regeneration zone occurs in the absence of external diffusion factors, which contributes to intensive heat exchange between the catalyst pellets and the gas flow, and, as a consequence, decrease in the catalyst pellets wear during regeneration.

Gas flow velocity, pipeline length and, consequently, the catalyst residence time in the pipeline are selected based on the process parameters and features of the catalyst used. It is optimal to supply nitrogen in such a way as to create a turbulent flow in the pipeline, at that a sufficiently high ratio of the supplied gas volume to the catalyst volume ensures minimization of contact both between individual catalyst pellets and their contact with the pipeline walls.

An additional advantage of using the proposed unit is that it is possible to achieve a gentle mode of the catalyst transfer, both when transporting the catalyst from the Reaction Columns to the Regeneration Column, and by distributing the catalyst flow after regeneration into two Reaction Columns of the Reactors.

The reforming process is optimally carried out on a catalyst containing platinum, tin and other promoting components on alumina support, as a rule, under the following conditions: temperature - 490-550°C and pressure 0.3-0.7 MPa, feed space velocity of no more than 2 h⁻¹, and H2: HC ratio of 2.0-2.15: 1 mol / mol.

### Brief Description of Drawing Figures

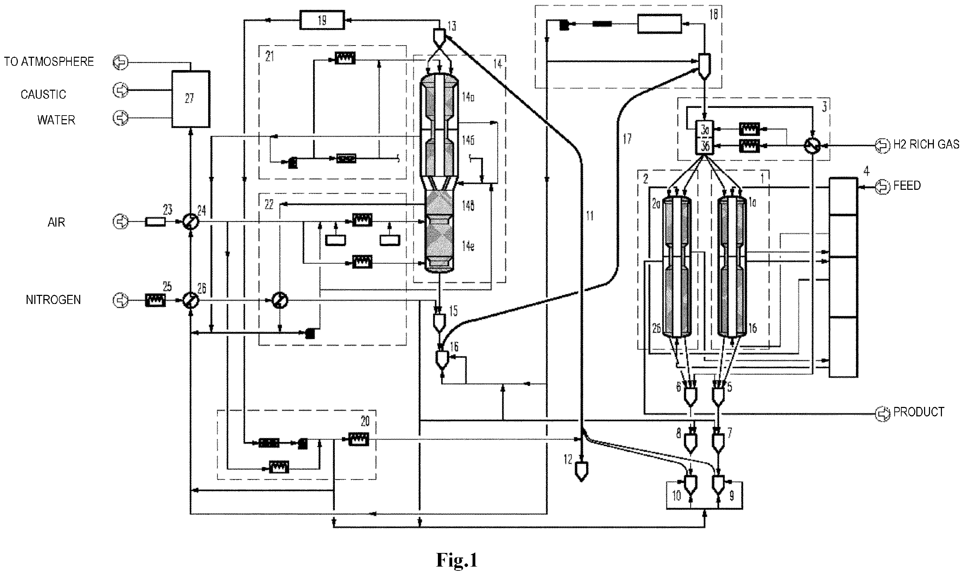

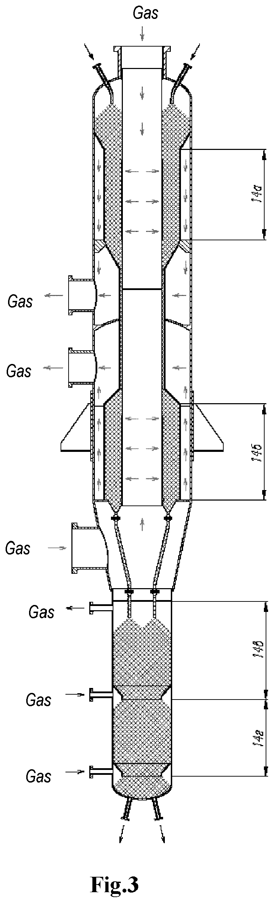

The invention is illustrated by the following drawings. General view of the proposed unit is shown in Fig. 1, Reactor layout is shown in Fig. 2 (a - Reactor diagram with feed movement from periphery to center, b - Reactor diagram with feed movement from center to periphery), Regeneration Column layout is shown in Fig. 3, where the following legend is used.
1. Reaction Column 1, where 1a and 1b are column sections.
2. Reaction Column 2, where 2a and 2b are column sections.
3. Reduction Unit, where
3a - first reduction chamber, 3b - second reduction chamber.
4. Multi-chamber preheater.
5. Purge hopper.
6. Purge hopper.
7. Lock hopper.
8. Lock hopper.
9. Coked catalyst transport hopper.
10. Coked catalyst transport hopper.
11. Coked catalyst transportation and regeneration pipeline.
12. Catalyst receiving hopper.
13. Coked catalyst handling hopper.
14. Regeneration Column, where 14a is the first burn-off zone, 14b is the second burn-off zone, 14c is the oxychlorination zone, 14d is the calcination zone.
15. Lock hopper.
16. Regenerated catalyst transport hopper.
17. Catalyst transportation and inerting pipeline
18. Catalyst fines screening unit.
19. Catalyst fines removal system.
20. Circulation gas unit.
21. Regeneration gas unit.
22. Oxychlorination and calcination gas unit.
23.Air drying system.
24. Off-gas heat exchanger.
25. Nitrogen heater.
26. Off-gas heat exchanger.
27. Off-gas neutralization unit.

### Industrial Applicability

The unit operates as follows.

The gas-feed mixture, after heating by the effluent gas-product mixture from the bottom Reactor of Reforming Column 2, enters the multi-chamber preheater 4, where it is heated to the reaction temperature and enters the first section 1a of the Reaction Column 1. The partially reformed gas-feed mixture from the first section 1a is sent to the second stage of the multi-chamber preheater 4, heats up to the reaction temperature and then passes sequentially section 16 of the Reaction Column 1, sections 2a and 2b of the Reaction Column 2 with intermediate heating before each section in the corresponding stage of the multi-chamber preheater 4. The gas-product mixture from the bottom Reactor of Reaction Column 2 is sent to heat the gas-feed mixture before the first stage of the multi-chamber preheater.

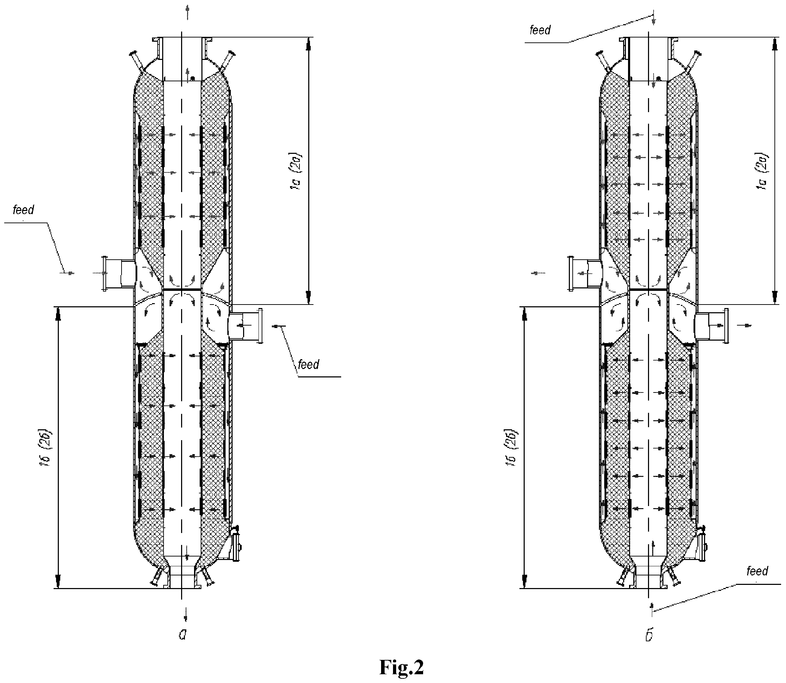

For each section of the Reaction Column, the following flow pattern is provided for the catalyst and gas streams. Feed movement is from the center to the periphery. The feed of the upper section 1a, 2a of a two-section apparatus (see Fig. 2) enters the central perforated pipe through the central nozzle located on the top head, passes through the catalyst bed of the upper section, is converted into a finished product, passes through the perforated shell of the upper section into the annular gap, and come out through the nozzle in the shell. The feed enters the lower section 1b, 2b through the central nozzle located on the bottom head, passes through the catalyst bed, is converted into a finished product, passes through the perforated shell of the lower section into the annular gap and comes out through the nozzle in the shell. The catalyst moves by gravity from the upper sections 1a and 2a through the guide cone and cylindrical channel and comes to the corresponding lower section 1b and 2b.

The catalyst from the Reduction Unit 3, by gravity enters Reaction Columns 1 and 2 in two parallel flows, passes them and then through the purge hoppers 5 and 6 enters the lock hoppers 7 and 8. Then the catalyst enters the coked catalyst transport hoppers 9 and 10, respectively.

From the coked catalyst transport hoppers, with a stream of nitrogen-air mixture from Unit 20 where it is prepared (mixed and heated), the catalyst flows into the pipeline 11 for transportation and partial regeneration and then into the coked catalyst handling hopper 13. The gas supplied to the coked catalyst hoppers 9 and 10 is, as a rule, a mixture of inert gas - nitrogen and air (with oxygen content in the mixture of 0.5-2.0% by volume).

An additional flow of nitrogen-air mixture (circulation gas) is supplied to the beginning of the vertical section of pipeline 11. The quantity and composition of the mixture provide the optimal pneumatic conveying mode (gas phase velocity in the pipeline is 180 ÷ 200% of the transported catalyst hovering velocity).

The presence of oxygen in pipeline 11 ensures partial coke burn-off from the catalyst surface. The catalyst movement in a rarefied flow (with solid phase volume concentration not exceeding 0.5% vol.) in pipeline 11 provides a gentle and efficient mode of coke burn-off due to the absence of external diffusion resistance to the coke burn-off, a uniform temperature profile and oxygen concentration in each horizontal section of pipeline 11, as well as due to the absence of local overheating of catalyst pellets.

In the coked catalyst handling hopper 13, the catalyst is separated from the circulation gas flow and by gravity enters the first burn-off zone 14a of the Regeneration Column 14.

Circulation gases from the coked catalyst handling hopper 13 through the catalyst fines removal system 19 enter the Circulation Gas Unit 20.

In the catalyst fines removal system 19, mechanical impurities - catalyst fines formed due to mechanical wear of the catalyst pellets - are separated from the circulation gas flow.

From the Circulation Gas Unit 20, part of the circulation gas flow is separated and directed through the off-gas heat exchangers 26 and 24 for neutralization to the Off-Gas Neutralization Unit 27. The rest of the circulation gas flow is divided and enters the beginning of pipeline 11 and the coked catalyst hoppers 9 and 10.

Treated makeup air is fed into the Circulation Gas Unit 20 in the amount that provides the required oxygen content in the circulation gas at the beginning of the vertical section of pipeline 11.

In the event of malfunction of pipeline 11, the catalyst receiving hopper 12 is provided to collect the transported catalyst.

The catalyst entering the first burn-off zone 14a of the Regeneration Column 14 contacts the regeneration gas stream. At that, the coke is completely or partially burned off the catalyst surface.

From the first burn-off zone 14a, by gravity, through the guide cone and the annular channel, the catalyst enters the second burn-off zone 14b of the Regeneration Column 14, where it contacts the regeneration gas stream. At that, the residual coke is completely burned off the catalyst surface.

Regeneration gases entering through the central perforated pipe into the first burn-off zone 14a pass sequentially through the annular catalyst bed and perforated shell, after which they are removed from the Regeneration Column 14, mixed with the make-up stream of treated air, and returned to the second burn-off zone 14b of the Regeneration Column 14.

Regeneration gases entering the central perforated pipe through the nozzle located on the taper adapter between the burn-off and oxychlorination zones and then the second burn-off zone 14b, pass sequentially through the annular catalyst bed and perforated shell, after which they are removed from the Regeneration Column 14 to the Regeneration Gas Unit 21.

From Regeneration Gas Unit 21, part of the regeneration gas stream is separated and sent through the off-gas heat exchangers 26 and 24 for neutralization to the Off-Gas Neutralization Unit 27. The rest of the regeneration gas stream is directed to the first burn-off zone 14a of the Regeneration Column 14.

Regenerated catalyst from the second burn-off zone 14b of the Regeneration Column 14, through the burn-off zone discharge pipes, by gravity enters sequentially the oxychlorination zone 14c and calcination zone 14d, after which it is removed from Regeneration Column 14.

The air passes sequentially through the air drying system 23 and the off-gas heat exchanger 24, after which it is divided into two streams: part of the air comes to the oxychlorination and calcination gas unit 22, the other part - to the circulation gas unit 20.

The air stream entering the calcination zone 14d of the Regeneration Column 14 passes in counter-flow through the downward catalyst flow and enters the oxychlorination zone 14c of the Regeneration Column 14, from which, along with the oxychlorination gas, it is withdrawn from the Regeneration Column 14 and sent to the oxychlorination and calcination gas unit 22.

Part of the air from oxychlorination and calcination gas unit 22 is directed to make-up the regeneration gases entering the second burn-off zone 14b of the Regeneration Column 14.

The catalyst from the calcination zone 14d of the Regeneration Column 14 by gravity enters the lock hopper 15.

To exclude the possibility of oxygen-containing gas flow from the calcination zone 14d of the Regeneration Column 14 to the Reduction Unit 3 and oxygen-containing gas blowing off from the catalyst stream, an inert gas - nitrogen - is supplied to the lock hopper 15.

The catalyst from the lock hopper 15 by gravity enters the regenerated catalyst transport hopper 16, into which a stream of nitrogen is supplied in the amount that ensures stable transportation and inertisation of the transported catalyst. In the course of transfer to the catalyst fines screening unit 18 through the pipeline 17, oxygen traces are completely removed from the catalyst pores, which creates optimal conditions for the subsequent reduction process.

The catalyst entering the catalyst fines screening unit 18 interacts with the circulating screening stream, as a result of which the catalyst fines and dust are separated from the catalyst flow. Part of the circulating screening stream after cleaning in the catalyst fines screening unit 18 is separated from the main flow and enters the regenerated catalyst hopper 16.

Further, the catalyst from the catalyst fines screening unit 18 enters the first reduction chamber 3a, and then by gravity enters the second reduction chamber 3b.

In the reduction chambers 3a and 3b, the catalyst is reduced in the stream of hot H2-rich gas at a pressure of 0.4-0.6 MPa, first at a temperature of 350-400°C, and then at 450-550°C, with H2-rich gas flow rate in chamber 3a: 1100-1500 nm³/hour, in chamber 3b: 600-1100 nm³/hour.

The reduced catalyst, in two streams, from the Reduction Unit 3 enters the Reaction Columns 1 and 2, where it interacts with the gas-feed mixture moving along the annular space of the Reactor in the direction from the center to the periphery (or from the periphery to the center) (see Fig. 2).

As a result of the proposed optimization of the unit diagram, it was possible to reduce the catalyst abrasion by 15-20% and the catalyst reduction time by 12-15%. At that, the process efficiency is not reduced.

The industrial applicability of the patented process is illustrated by the following examples.

**Example** 1. A platinum-containing reforming catalyst promoted with - γ-Al₂O₃ supported tin was tested in the above-described unit.

The tests were carried out under the following conditions:
Reaction zone

| | |
|---|---|
| Number of annular sections in the Reaction Column | 2 |

White burn

**Temperature mode of coke burn-off by zone, °C:**

| | |
|---|---|
| - preliminary coke burn-off zone | 200-450 |
| - 1st burn-off stage in the Regenerator | 470-520 |
| - 2nd burn-off stage in the Regenerator | 470-520 |

**Pressure in the Regenerator by zone, MPa (g)**

| | |
|---|---|
| - preliminary coke burn-off zone | 0,4-0,6 |
| - 1st burn-off stage in the Regenerator | 0,4-0,6 |
| - 2nd burn-off stage in the Regenerator | 0,4-0,6 |
| Regeneration gas circulation rate, nm³/hour | -450-500 |
| Fresh air flow rate from oxychlorination zone for regeneration, nm³/hour | 500-1100 |
| Oxygen concentration in regeneration gases by zone (at the burn-off zone inlet), % vol. | 0,3-2,0 |

Catalyst oxychlorination and calcination

| | |
|---|---|
| Oxychlorination/calcination temperature mode, °C | 500-520/520-550 |
| Pressure in the oxychlorination / calcination zone, MPa (g) | 0,4-0,6 |
| Chlorinated organics flow rate (in terms of chlorine), % wt. for catalyst | 0,02-0,08 |
| Oxygen content in the circulating gas, % vol. | 20-21 |

Catalyst inerting

| | |
|---|---|
| Nitrogen - catalyst volume ratio (in 17) | 50-150 |
| Residence time (in 17), s | 5-20 |
| Temperature (in 17),°C | 400-550 |

Reduction zone

**Reduction zone temperature, °C**

| | |
|---|---|
| - upper zone | 350-400 |
| - lower zone | 450-550 |
| Pressure in reduction zones, MPa (g) | 0,4-0,6 |

**H2-rich gas flow rate for reduction, nm³/hour**

| | |
|---|---|
| - to the first zone | 1500-2500 |
| - to the second zone | 600-1100 |
| - hydrogen content in H2-rich gas for reduction | 90% vol. |

In accordance with the results obtained, catalyst abrasion and catalyst reduction time were 2.5% and 2.97 h, which is 19.7% and 15.2%, respectively, lower than the indicators obtained when testing this catalyst on an analogous unit, which amounted to 3.4% and 3.5 h.

**Example** 2. A platinum-containing reforming catalyst promoted with -γ-Al₂O₃ supported rhenium and tin was tested in the above-described unit.

The tests were carried out under the following conditions:
Reaction zone

| | |
|---|---|
| Number of annular sections in the Reaction Column | 4 |

White burn

**Temperature mode of coke burn-off by zone, °C:**

| | |
|---|---|
| - preliminary coke burn-off zone | 200-450 |
| - 1st burn-off stage in the Regenerator | 470-520 |
| - 2nd burn-off stage in the Regenerator | 470-520 |

**Pressure in the Regenerator by zone, MPa (g)**

| | |
|---|---|
| - preliminary coke burn-off zone | 0,4-0,6 |
| - 1st burn-off stage in the Regenerator | 0,4-0,6 |
| - 2nd burn-off stage in the Regenerator | 0,4-0,6 |
| Regeneration gas circulation rate, nm³/hour | -450-500 |
| Fresh air flow rate from oxychlorination zone for regeneration, nm³/hour | 500-1100 |
| Oxygen concentration in regeneration gases by zone (at the burn-off zone inlet), % vol. | 0,3-2,0 |

Catalyst oxychlorination and calcination

| | |
|---|---|
| Oxychlorination/calcination temperature mode, °C | 500-520/520-550 |
| Pressure in the oxychlorination / calcination zone, MPa (g) | 0,4-0,6 |
| Chlorinated organics flow rate (in terms of chlorine), % wt. for catalyst | 0,02-0,08 |
| Oxygen content in the circulating gas, % vol. | 20-21 |

Catalyst inerting

| | |
|---|---|
| Nitrogen - catalyst volume ratio (in 17) | 50-150 |
| Residence time (in 17), s | 5-20 |
| Temperature (in 17),°C | 400-550 |

Reduction zone

**Reduction zone temperature, °C**

| | |
|---|---|
| - upper zone | 350-400 |
| - lower zone | 450-550 |
| Pressure in reduction zones, MPa (g) | 0,4-0,6 |

**H2-rich gas flow rate for reduction, nm³/hour**

| | |
|---|---|
| - to the first zone | 1500-2500 |
| - to the second zone | 600-1100 |
| - hydrogen content in H2-rich gas for reduction | 90 % vol. |

In accordance with the results obtained, catalyst abrasion and catalyst reduction time were 2.15% and 2.63 h, which is 14.2% and 12.3%, respectively, lower than the indicators obtained when testing this catalyst on an analogous unit, which amounted to 2.5% and 3.0 h.

Example 3. A platinum-containing reforming catalyst promoted with - γ-Al₂O₃ supported iridium and tin was tested in the above-described unit.

The tests were carried out under the following conditions:
Reaction zone

| | |
|---|---|
| Number of annular sections in the Reaction Column | 2 |

White burn

**Temperature mode of coke burn-off by zone, °C:**

| | |
|---|---|
| - preliminary coke burn-off zone | 200-450 |
| - 1st burn-off stage in the Regenerator | 470-520 |
| - 2nd burn-off stage in the Regenerator | 470-520 |

**Pressure in the Regenerator by zone, MPa (g)**

| | |
|---|---|
| - preliminary coke burn-off zone | 0,4-0,6 |
| - 1st burn-off stage in the Regenerator | 0,4-0,6 |
| - 2nd burn-off stage in the Regenerator | 0,4-0,6 |
| Regeneration gas circulation rate, nm³/hour | -450-500 |

**Fresh air flow rate from oxychlorination zone**

| | |
|---|---|
| for regeneration, nm³/hour | 500-1100 |
| Oxygen concentration in regeneration gases by zone (at the burn-off zone inlet), % vol. | 0,3-2,0 |

Catalyst oxychlorination and calcination

| | |
|---|---|
| Oxychlorination/calcination temperature mode, °C | 500-520/520-550 |
| Pressure in the oxychlorination / calcination zone, MPa (g) | 0,4-0,6 |

**Chlorinated organics flow rate (in terms of chlorine), % wt.**

| | |
|---|---|
| for catalyst | 0,02-0,08 |
| Oxygen content in the circulating gas, % vol. | 20-21 |

Catalyst inerting

| | |
|---|---|
| Nitrogen - catalyst volume ratio (in 17) | 50-150 |
| Residence time (in 17), s | 5-20 |
| Temperature (in 17), °C | 400-550 |

Reduction zone

**Reduction zone temperature, °C**

| | |
|---|---|
| - upper zone | 350-400 |
| - lower zone | 450-550 |
| Pressure in reduction zones, MPa (g) | 0,4-0,6 |

**H2-rich gas flow rate for reduction, nm³/hour**

| | |
|---|---|
| - to the first zone | 1500-2500 |
| - to the second zone | 600-1100 |
| - hydrogen content in H2-rich gas for reduction | 90 % vol. |

In accordance with the results obtained, catalyst abrasion and catalyst reduction time were 2.46% and 2.78 h, which is 15.3% and 13.2%, respectively, lower than the indicators obtained when testing this catalyst on an analogous unit, which amounted to 2.9% and 3.2 h.

Thus, in comparison with the tests of this catalyst carried out on an analogous unit, the catalyst abrasion was reduced from 2.5-3.4% to 2.15-2.83% (by 14.2-16.7%) and catalyst reduction time was reduced from 3.5-3.0 h to 2.97-2.63 h (by 12.3-15.2%).

The invention concerns a catalytic reforming plant with continuous regeneration of catalyst using platinum-tin-containing catalyst, containing reactor unit, including two parallel reaction columns and located at the outlet of them blowing hoppers of coked catalyst, gate and transport bins, bins for preparation of coked catalyst, regeneration column, system of gas preparation and pipelines. In particular pipeline for transportation of catalyst into regeneration column and partial regeneration of catalyst in medium of nitrogen-air mixture. The reaction column contains annular sections containing platinum-tin-containing reforming catalyst, and central perforated pipeline. The column sections are made in lower part funnel-shaped and are connected to each other by device for transportation of catalyst, made in form of annular channelcoaxial to the central pipeline. The central pipeline at the end of each section is covered with a gas-impermeable partition, and the sections have gas-permeable side walls, along which there is an annular gap between the wall of the section and the wall of the housing, connected to the branch pipes for supply and discharge of product flows. The regeneration column comprises a central perforated pipeline and annular sections of coke burning zones containing a catalyst along which there is an annular gap between the wall of the section and the wall of the housing. These are connected to each other by means of a separating device consisting of a funnel-shaped lower part of the above section and an annular channel coaxial to the central pipeline, oxychlorination section connected to the lower zone of coke burning by a separating device for transporting the catalyst, made in the form of unloading pipes, providing passage of the catalystbut preventing passage of gases. A pumping section is connected to the oxychlorination section by a funnel-shaped device for transporting the catalyst. A central pipeline at the end of each section of the burning zone is covered with a gas-impermeable partition, and the sections of the burning zone have gas-permeable side walls, wherein the reactor unit and the regeneration unit are connected to each other by pipelines for transporting coked and recovered catalyst.

Catalytic reforming plant in that regeneration column is located in space parallel to reaction columns of reactor unit, wherein pipeline for transportation of coked catalyst is connected to unit for mixing nitrogen and air and preparation of nitrogen-air mixture, and pipeline of recovered catalyst is connected to nitrogen supply system. The method wherein the reaction columns include consecutive annular sections.

## Claims

1. The Catalytic Reforming Unit with continuous catalyst regeneration using a platinum-tin catalyst containing a Reactor Unit including two parallel Reaction Columns and coked catalyst purge hoppers located at the column outlet, lock hoppers and transport hoppers, coked catalyst handling hoppers, a Regeneration Column, gas treatment system and pipelines, in particular a pipeline for catalyst transportation to the Regeneration Column and partial catalyst regeneration in a nitrogen-air mixture, **characterized in that** the Reaction Column includes annular sections containing tin-containing reforming catalyst and a central perforated pipeline, at that the sections in the bottom part are funnel-shaped and interconnected by a device for catalyst transportation made in the form of the annular channel coaxial with the central pipeline, the central pipeline at the end of each section is shut off with a gas-tight baffle, while the sections have gas-permeable side walls, along which an annular gap is made between the section wall and the body wall connected with the nozzles for supply and discharge of product streams, and the Regeneration Column includes a central perforated pipeline and catalyst-containing annular sections of coke burn-off zones, along which an annular gap is made between the section wall and the body wall, and interconnected by means of a separating device consisting of a funnel-shaped bottom part of the upper section and the annular channel coaxial with the central pipeline, an Oxychlorination Section connected with the lower coke burn-off zone by a separating device for catalyst transfer made in the form of discharge pipes and ensuring the catalyst passage, but preventing the passage of gases, a Calcination Section connected to the Oxychlorination Section by a funnel-shaped catalyst transfer device, the central pipeline at the end of each section in the burn-off zone is shut off by a gas-tight baffle, and sections in the burn-off zone have gas-permeable side walls, at that the Reactor block and the Regeneration block are interconnected by pipelines for transporting the coked and regenerated catalyst.

2. Catalytic Reforming Unit according to Claim 1, **characterized in that** the Regeneration Column is located in space parallel to the Reaction Columns of the Reactor Unit, at that the coked catalyst transportation pipeline is connected to the nitrogen and air mixing and nitrogen-air mixture preparation unit, and the regenerated catalyst pipeline is connected to the nitrogen supply system.

3. Unit according to Claim 1, **characterized in that** the Reaction Columns include two to four successive annular sections.
